# EUROPEAN PATENT SPECIFICATION

(11) **EP 4 344 275 B1**
(45) Date of publication and mention of the grant of the patent: **28.01.2026**
(21) Application number: 23198519.3
(22) Date of filing: 20.09.2023
(51) Int. Cl.: H04W 12/04, H04W 12/50, H04W 12/00, H04L 9/32, H04L 9/40, H04W 84/18, H04L 9/06

(54) **ASSOCIATING UNCLAIMED COMMUNICATIONS NODES**
ZUORDNUNG VON NICHT EINGEFORDERTEN KOMMUNIKATIONSKNOTEN
ASSOCIATION DE NOEUDS DE COMMUNICATION NON REVENDIQUÉS

(30) Priority: 23.09.2022 US 202217951811
(43) Date of publication of application: 27.03.2024
(73) Proprietor: Adtran, Inc., Huntsville, AL 35806 (US)
(72) Inventor: WHITTAKER, Colin, Huntsville, 35806 (US)
(74) Representative: Fish & Richardson P.C.

(56) References cited:
- EP-A1- 2 713 639
- EP-A1- 3 907 934
- US-B2- 10 952 263
- "Frame and MPDU Formats", vol. 802.11 drafts, 21 May 1996 (1996-05-21), pages 1 - 26, XP068136986, Retrieved from the Internet <URL:www.ieee802.org/11/archive2/original 802.11 drafts/DREFT407/SEC4.doc> [retrieved on 19960521]
- "Wi-Fi Protected Setup Specification Version 1.0h", 31 December 2006 (2006-12-31), Internet, pages 1 - 110, XP055031152, Retrieved from the Internet <URL:http://gpl.back2roots.org/source/puma5/netgear/CG3200-1TDNDS_GPL/ap/apps/wpa2/original/Wi-Fi Protected Setup Specification 1.0h.pdf> [retrieved on 20120626]
- N/A: "Wi Mesh Alliance Proposal Presentation ; 11-05-0574-00-000s-wi-mesh-alliance-proposal-presentation", IEEE DRAFT; 11-05-0574-00-000S-WI-MESH-ALLIANCE-PROPOSAL-PRESENTATION, IEEE-SA MENTOR, PISCATAWAY, NJ USA, vol. 802.11s, 15 June 2005 (2005-06-15), pages 1 - 310, XP017689005

## Description

This specification generally relates to communications systems, including mesh networks.

Mesh networks include communications nodes configured to perform one or more operations. Communications nodes can be configured in many different ways, for example, based on services that are being provided to customers receiving communications service from the communications nodes. For example, the communications nodes can be configured to provide certain calling features, access to a wireless network, or certain levels of data service. Over time the configuration of communications nodes may change (e.g., due to added or changed services).

US 10,952,263 B2 discloses an automatic wireless pairing of a user's new device with the user's wireless access point via a pairing initiation server.

["Frame and MPDU Formats, IEEE Draft; SEC4, IEEE-SA, PISCATAWAY, NJ, USA, 802.11 drafts, 21 May 1996, pages 1-26] describes frames and MPDU formats.

["Wi-Fi Protected Setup Specification Version 1.0h", 31 December 1006, pages 1-110] is the specification of the Wi-Fi protected setup.

EP 3 907 934 A1 refers to an improved network coverage via universal receivers and gateway devices or mesh access points.

["Wi Mesh Alliance Proposal Presentation", IEEE draft, 802.11s, 15 June 2005, pages 1-310] are proposals for IEEE 802.11 referring in particular to mesh networks.

EP 2 713 639 A1 describes an image forming apparatus to support Wi-Fi Direct.

The objective of this approach is to improve existing solutions. This is achieved according to the features of the independent claims. Further embodiments result from the depending claims.

The examples suggested herein may in particular be based on at least one of the following solutions. Combinations of the following features may be utilized to reach a desired result. The features of the method could be combined with any feature(s) of the medium or system or vice versa.

A method is provided comprising the steps:
- receiving, by a wireless receiver of a controller, broadcast information transmitted by a transmitting device, wherein the broadcast information includes (i) identifying information of the transmitting device and (ii) an invalid address that does not represent a device configured to communicate with a given controller, wherein receipt of the invalid address is an indication that the device is within the communications range of the controller, and the controller using the identifying information to add the device to a list of devices that are available to be added to a mesh network of the controller;
- transmitting, by the controller and without registering the transmitting device with the controller, a password request to the transmitting device in response to receiving the broadcast information;
- obtaining, by the controller and from the transmitting device responsive to the password request, password information that includes hashed data generated by a hash algorithm operated by the transmitting device;
- generating, by the controller, a hash result by applying the hash algorithm to an identifier of the transmitting device;
- comparing, by the controller, the hashed data received from the transmitting device to the hash result generated by the controller;
- updating, by the controller, a set of registered network devices based on comparing the hashed data with the hash result, including:
   - registering, by the controller, the transmitting device in the set of registered network devices based on the comparison resulting in a match between the hashed data and the hashed result; and
   - omitting, by the controller, the transmitting device from the set of registered network devices based on the comparison revealing a lack of the match between the hashed data and the hashed result.

According to an embodiment, the invalid address is not associated with any device in a transmitting vicinity of the transmitting device, and is in a form of a media access control (MAC) address.

According to an embodiment, the method further comprises: enabling a WPS-PIN service in response to receiving the broadcast information.

According to an embodiment, generating the hash result by applying the hash algorithm comprises:
- hashing a MAC address of the transmitting device.

According to an embodiment, the identifying information of the transmitting device includes a device identifier and transmitting device capability details.

According to an embodiment, the transmitting device capability details indicate that the transmitting device is configured to operate as a satellite node in a mesh network.

According to an embodiment, the method further comprises:
- receiving, by the controller, user input requesting that the transmitting device be added as a node in a mesh network managed by the controller, wherein transmitting the password request is performed in response to receiving the user input.

According to an embodiment, the method further comprises:
- adding the transmitting device to topology data for a mesh Wi-Fi network.

Further, a non-transitory computer-readable medium is suggested storing one or more instructions executable by a computer system to perform operations comprising:
- receiving, by a wireless receiver of a controller, broadcast information transmitted by a transmitting device, wherein the broadcast information includes (i) identifying information of the transmitting device and (ii) an invalid address that does not represent a device configured to communicate with a given controller, wherein receipt of the invalid address is an indication that the device is within the communications range of the controller, and the controller using the identifying information to add the device to a list of devices that are available to be added to a mesh network of the controller;
- transmitting, by the controller and without registering the transmitting device with the controller, a password request to the transmitting device in response to receiving the broadcast information;
- obtaining, by the controller and from the transmitting device responsive to the password request, password information that includes hashed data generated by a hash algorithm operated by the transmitting device;
- generating, by the controller, a hash result by applying the hash algorithm to an identifier of the transmitting device;
- comparing, by the controller, the hashed data received from the transmitting device to the hash result generated by the controller;
- updating, by the controller, a set of registered network devices based on comparing the hashed data with the hash result, including:
   - registering, by the controller, the transmitting device in the set of registered network devices based on the comparison resulting in a match between the hashed data and the hashed result; and
   - omitting, by the controller, the transmitting device from the set of registered network devices based on the comparison revealing a lack of the match between the hashed data and the hashed result.

According to an embodiment, the invalid address is not associated with any device in a transmitting vicinity of the transmitting device, and is in a form of a media access control (MAC) address.

According to an embodiment, the operations comprise enabling a WPS-PIN service in response to receiving the broadcast information.

According to an embodiment, generating the hash result by applying the hash algorithm comprises:
- hashing a MAC address of the transmitting device.

According to an embodiment, the identifying information of the transmitting device includes a device identifier and transmitting device capability details.

According to an embodiment, the transmitting device capability details indicate that the transmitting device is configured to operate as a satellite node in a mesh network.

According to an embodiment, the operations comprise:
- receiving, by the controller, user input requesting that the transmitting device be added as a node in a mesh network managed by the controller, wherein transmitting the password request is performed in response to receiving the user input.

According to an embodiment, the operations comprise:
- adding the transmitting device to topology data for a mesh Wi-Fi network.

Also, a system is provided, comprising:
- one or more processors; and
- machine-readable media interoperably coupled with the one or more processors and storing one or more instructions that, when executed by the one or more processors, perform operations comprising:
   - receiving, by a wireless receiver of a controller, broadcast information transmitted by a transmitting device, wherein the broadcast information includes (i) identifying information of the transmitting device and (ii) an invalid address that does not represent a device configured to communicate with a given controller, wherein receipt of the invalid address is an indication that the device is within the communications range of the controller, and the controller using the identifying information to add the device to a list of devices that are available to be added to a mesh network of the controller;
   - transmitting, by the controller and without registering the transmitting device with the controller, a password request to the transmitting device in response to receiving the broadcast information;
   - obtaining, by the controller and from the transmitting device responsive to the password request, password information that includes hashed data generated by a hash algorithm operated by the transmitting device;
   - generating, by the controller, a hash result by applying the hash algorithm to an identifier of the transmitting device;
   - comparing, by the controller, the hashed data received from the transmitting device to the hash result generated by the controller;
   - updating, by the controller, a set of registered network devices based on comparing the hashed data with the hash result, including:
      - registering, by the controller, the transmitting device in the set of registered network devices based on the comparison resulting in a match between the hashed data and the hashed result; and
      - omitting, by the controller, the transmitting device from the set of registered network devices based on the comparison revealing a lack of the match between the hashed data and the hashed result.

According to an embodiment, the invalid address is not associated with any device in a transmitting vicinity of the transmitting device, and is in a form of a media access control (MAC) address.

According to an embodiment, the operations comprise enabling a WPS-PIN service in response to receiving the broadcast information.

According to an embodiment, generating the hash result by applying the hash algorithm comprises:
- hashing a MAC address of the transmitting device.

The present disclosure provides methods, systems, and apparatus for associating unclaimed mesh satellites. In general, one innovative aspect of the subject matter described in this specification can be embodied in a method that includes receiving, by a wireless receiver of a controller, broadcast information transmitted by a transmitting device, where the broadcast information includes (i) identifying information of the transmitting device and (ii) an invalid address that does not represent a device configured to communicate with a given controller; transmitting, by the controller and without registering the transmitting device with the controller, a password request to the transmitting device in response to receiving the broadcast information; obtaining, by the controller and from the transmitting device responsive to the password request, password information that includes hashed data generated by a hash algorithm operated by the transmitting device; generating, by the controller, a hash result by applying the hash algorithm to an identifier of the transmitting device; comparing, by the controller, the hashed data received from the transmitting device to the hash result generated by the controller; updating, by the controller, a set of registered network devices based on comparing the hashed data with the hash result, including: registering, by the controller, the transmitting device in the set of registered network devices based on the comparison resulting in a match between the hashed data and the hashed result; and omitting, by the controller, the transmitting device from the set of registered network devices based on the comparison revealing a lack of the match between the hashed data and the hashed result.

Other implementations of this and other aspects include corresponding systems, apparatus, and computer programs, configured to perform the actions of the methods, encoded on computer storage devices. A system of one or more computers can be so configured by virtue of software, firmware, hardware, or a combination of them installed on the system that in operation cause the system to perform the actions. One or more computer programs can be so configured by virtue of having instructions that, when executed by data processing apparatus, cause the apparatus to perform the actions.

The foregoing and other embodiments can each optionally include one or more of the following features, alone or in combination. For instance, in some implementations, the invalid address is not associated with any device in a transmitting vicinity of the transmitting device, and is in a form of a media access control (MAC) address.

In some implementations, actions include enabling a WPS-PIN service in response to receiving the broadcast information. In some implementations, generating the hash result by applying the hash algorithm includes hashing a MAC address of the transmitting device.

In some implementations, the identifying information of the transmitting device includes a device identifier and transmitting device capability details. In some implementations, the transmitting device capability details indicate that the transmitting device is configured to operate as a satellite node in a mesh network.

In some implementations, actions include receiving, by the controller, user input requesting that the transmitting device be added as a node in a mesh network managed by the controller, where transmitting the password request is performed in response to receiving the user input. In some implementations, actions include adding the transmitting device to topology data for a mesh Wi-Fi network.

Advantages provided by the subject matter discussed herein can include the ability to transfer mesh network communications credentials from a controller to a satellite communications node ("satellite node", or "satellite") without any pre-provisioning, cabled connections, or interaction of the user with the satellite node by way of physical or virtual button pushing. This solves the technical problem of provisioning satellite nodes that do not have the needed credentials to join a mesh network in a secure way and without user intervention with the satellite node. The ability to provision satellite nodes in the manner described herein is an improvement over traditional mesh network provisioning techniques, for example, because the present process of pairing the satellite node with the controller is performed using a personal identification number (PIN) that is independently derived by each of the satellite node and the controller, whereas traditional pairing processes required a PIN of the controller to be entered at the satellite node (e.g., by way of user input). In other words, the traditional pairing processes required either physical access to the satellite node (or a secondary communications interface) to enter the PIN at the satellite node, which is no longer needed using the techniques discussed herein. Furthermore, the techniques discussed herein enable the satellite nodes to communicate their pairing availability to the controller by using a fake address that can be used by the controller to update a list of available nodes that can be added to the mesh network.

The details of one or more embodiments of the invention are set forth in the accompanying drawings and the description below. Other features and advantages of the invention will become apparent from the description, the drawings, and the claims.
- FIG.1: is a diagram showing an example system for detecting capable satellites available for inclusion in a mesh network.
- FIG.2: is a flow diagram illustrating an example, which does not form part of the claimed subject matter, for detecting capable satellites available for inclusion in a mesh network.
- FIG.3: is a diagram showing an example system for pairing an unclaimed mesh satellite with a mesh network.
- FIG.4: is a flow diagram illustrating an example process for pairing an unclaimed mesh satellite with a mesh network.
- FIG.5: is a diagram illustrating an example computing system used for provisioning satellite nodes for communication in a mesh network.

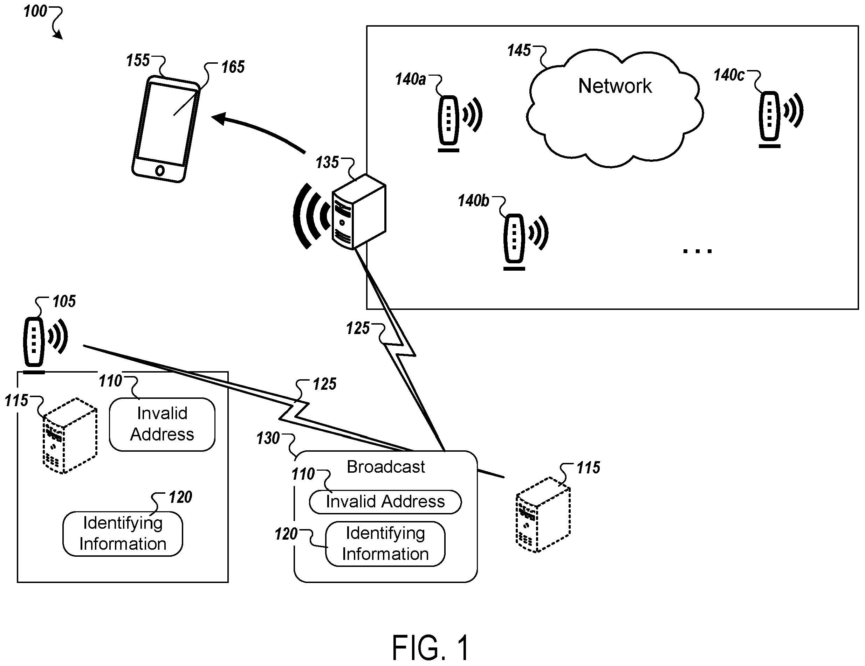

Like reference numbers and designations in the various drawings indicate like elements. FIG.1 is a diagram showing an example system 100 for detecting capable satellite nodes, also referred to as satellites, (e.g., satellite 105) for inclusion in a mesh network 145. The operations discussed in regard to FIG.1 can be used to add new or existing satellite nodes to a mesh network, or otherwise manage mesh network membership. Typically, mesh network setup (e.g., pairing) involves manual interaction to configure nodes. In contrast, the operations discussed in regard to FIG.1 can be performed without manual interaction from a user so that new or existing satellite nodes can be connected to one or more mesh networks automatically. This is particularly helpful when a satellite node is installed in a location that is not easily accessible.

The satellite 105 is a communication node with telecommunication capabilities, such as wireless communication capabilities. In this example, the satellite 105 includes a transmitting module (e.g., including one or more hardware elements) configured to modulate signals for reception by receiving modules, such as a receiving module included in controller 135. In some implementations, the satellite 105 includes both a transmitting module and receiving module to enable transmissions and reception of signals. In some implementations, the controller 135, similar to the satellite 105, includes both a transmitting module and receiving module to enable transmissions and reception of signals. Note that each module discussed herein can include hardware components, such that they can be implemented as physical devices.

In some implementations, the satellite 105 includes firmware. The firmware can be stored in a memory device of the satellite 105 and can include one or more processes or parameters for operation by one or more processors of the satellite 105. The firmware can be pre-installed, e.g., in a factory setting or before a customer turns the satellite 105 on. The satellite 105 obtains an invalid address 110. In some implementations, the satellite 105 obtains the invalid address 110 from firmware included in memory of the satellite 105. Of course, the invalid address 110 could be obtained in other way, for example, by generating the invalid address on the fly using an address generating technique that ensures the invalid address does not match the address of an actual device configured to communicate with the controller 135.

As discussed in more detail below, the satellite obtained an invalid address because this invalid address can be used as a signal to the controller 135 that the satellite 105 is available to be added to the mesh network (or otherwise claimed) by the controller 135. However, when the controller 135 receives the invalid address, it will not yet proceed to prompt the satellite for the required password. Rather, as discussed in more detail below, the controller 135 will include the node in a list of available satellites that can be added to the mesh network (e.g., in a graphical user interface in communication with the controller 135).

In some implementations, the invalid address 110 is a Media Access Control (MAC) address. For example, the invalid address 110 can be represented with alphanumeric symbols, such as, XX: XX: XX: XX: XX: XX, where X can be any symbol (e.g., 12:34:56:78:90:12, among others). The invalid address 110 can include any number of different symbols. Whereas a typical signal is sent to one or more addresses corresponding to actual devices, the satellite 105 sends a broadcast information 130 in the signal 125 for an invalid address 110. The invalid address 110 does not represent a device configured to communicate with the controller 135.

The satellite 105 generates broadcast information 130. The broadcast information 130 includes the invalid address 110 and identifying information 120 of the satellite 105. In some implementations, the identifying information 120 includes a device identifier (e.g., a device name and/or real address) of the satellite 105 and/or capability details of the satellite 105. A device identifier of the satellite 105 can include a MAC address or other unique identifier, e.g., a name. Capability details can include whether or not the satellite 105 supports one or more protocols for communication with one or more other devices, a version of firmware of the satellite, and/or a power level if battery operated, among other information.

The satellite 105 transmits the broadcast information 130 in a signal 125. The signal 125 can be a radio frequency ("RF") signal. The broadcast information 130 can be encoded within one or more modulations of the signal 125. A transmitting module (e.g., an RF transmitter including hardware) of the satellite 105 can be used to generate the modulation of the signal 125. In some implementations, the signal 125 includes modulation along a wired connection. In some implementations, the signal 125 includes modulation of electromagnetic radiation in an atmosphere.

The invalid device 115 corresponding to the invalid address 110 is shown graphically in FIG.1. The dotted line represents the fact that although the broadcast is sent to the invalid device 115, because it is invalid, the invalid device 115 does not actually receive it. In some implementations, the invalid device 115 does not exist as a device and the invalid address 110 represents an arbitrary address that does not correspond to any device. In some implementations, the invalid device 115 is a device that is configured not to respond or not to configure the satellite 105 as a satellite node within a mesh network, e.g., the mesh network 145.

When the signal 125 carrying the broadcast information 130 is transmitted by the satellite 105 within a receiving vicinity of the controller 135, a receiving element (e.g., an RF receiver including hardware) of the controller 135 receives the signal 125. The controller 135 can parse the signal 125 to obtain data of the broadcast information 130. For example, the controller 135 can demodulate the signal 125 and recover the broadcast information 130, and perform operations based on the contents of the broadcast information 130. For example, the controller 135 can be configured to determine that the invalid address 110 does not represent a device configured to communicate with the controller 135.

More specifically, the controller 135 can identify the invalid address 110 in the broadcast information 130, and determine whether the invalid address 110 is within a range of addresses that are assigned to devices that are configured to communicate with the controller. In response to determining that the invalid address 110 is not within a range of addresses that are assigned to devices configured to communicate with the controller 135, the controller 135 can refrain from initiating a traditional pairing process in which the controller 135 would open a communications channel with the satellite 105 and await submission of a password required to be entered at the satellite 105 to pair the satellite 105 with the controller 135. Instead, the controller 135 uses receipt of the invalid address as an indication that the satellite 105 is within the communications range of the controller 135, and uses the identifying information to add the satellite 105 to a list of satellites that are available to be added to the mesh network of the controller 135.

In some implementations, the controller 135 can present the list of satellites that are available to be added to the mesh network 145 ("available satellites") on a graphical user interface. For example, the controller 135 can include an embedded graphical user interface in which the available satellites can be presented. Alternatively, or additionally, the controller can be in communication with an external device 155, such as a tablet device or mobile device, on which the list of available satellites 165 can be presented.

In some implementations, a user of the external device 155 selects the satellite 105 using an interface of the external device 155. For example, the controller 135 can use the identifying information 120 to generate a selectable item for a user of the external device 155 to select. The selectable item can be included in the list of available satellites 165. The selectable item can include one or more elements included in the identifying information 120 or one or more elements generated using one or more elements included in the identifying information 120.

In some implementations, after a user of the external device 155 selects the satellite 105, an initiation process occurs. The initiation process can be performed by one or more of the satellite 105 or the controller 135. The initiation process can include the controller 135 enabling a WPS-PIN service. In some implementations, the controller 135 enables a WPS-PIN service by sending an initiate WPS-PIN 307 instruction to the satellite 105, where the initiate WPS-PIN 307 instruction is configured to initiate a WPS-PIN service of the satellite 105. The controller 135 can receive requests from one or more satellites or only the selected satellite 105. The satellite 105 can determine (e.g., using a client scanning process) that the controller 135 has enabled a WPS-PIN service. In some implementations, when the controller 135 enables a WPS-PIN 307 service, the satellite 105 determines (e.g., using a client scanning process) that the controller 135 has enabled a WPS-PIN service (e.g., the controller 135 can include WPS-PIN capability in a beacon of the controller 135). The initiation process can be performed by one or more of the satellite 105 or the controller 135 automatically without initiation by a user increasing the efficiency of setting up a mesh network and making larger, more complex, systems more feasible. In some implementations, the satellite 105 automatically initiates a connection request 309 after detecting the controller 135 has enabled the WPS-PIN service. A user does not have to manually enter in a PIN to setup the satellite 105, rather the WPS-PIN service is enabled and the satellite 105 can automatically provide the password information 320.

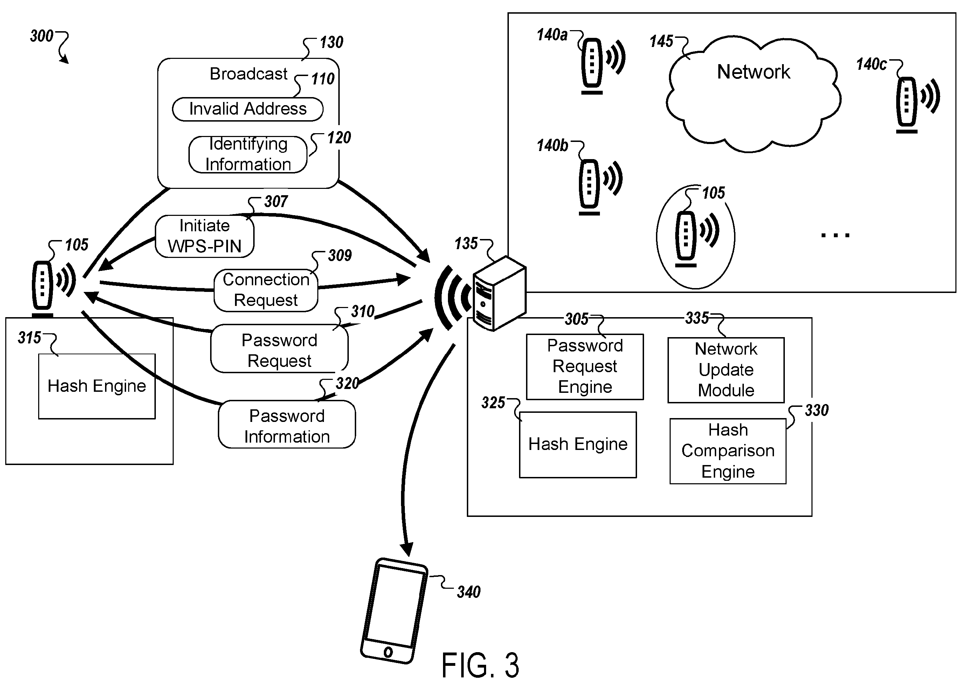

In some implementations, the satellite 105 scans beacons to determine that the controller 135 has enabled a WPS-PIN service (e.g., in response to providing the initiate WPS-PIN 307 instruction to the satellite 105). The satellite 105 can identify the controller 135 by determining that the controller 135 has enabled a WPS-PIN service. In some implementations, the satellite 105 sends a connection request 309 to the controller 135. The connection request 309 can include one or more elements equivalent to the elements of the broadcast 130. The connection request 309 can be directed to an address of the controller 135 instead of the invalid address 110. In some implementations, after the satellite 105 sends a connection request to the controller 135, the controller 135 sends a password request (e.g., password request 310 shown in FIG.3). In some implementations, the password request 310 includes a request for a PIN.

In some implementations, the controller 135 can update the list of available satellites, also referred to as a list of available nodes that are capable of communicating with the controller, and therefore capable of being added to the mesh network 145, based on the identifying information of the satellite 105 discussed above (or another transmitting device). For example, when the controller 135 determines that the invalid address is not included in the range of addresses that are assigned to devices configured to communicate with the controller 135, the controller can examine the other identifying information to obtain a name of the satellite 105, and update the list of available nodes by adding the name of the satellite 105 to the list of available nodes. In turn, the controller can present the list of available nodes (e.g., list 165) in the user interface of the external device 155 so that an administrator or user of the controller 135 can determine whether they want to initiate pairing of the controller 135 and the satellite 105, or any other satellite/node included in the updated list of available nodes.

When the controller 135 detects user interaction with an entry in the updated list of available nodes that corresponds to the satellite 105 (or another transmitting device), the controller 135 can initiate a node registration process that, upon completion, registers the satellite 105 (or another transmitting device) with the controller. In other words, when a user requests the addition of a node to the mesh network controlled by the controller 135 by interacting with an entry in the list of available nodes (e.g., using the device 340 shown in FIG.3), the controller 135 can transition to a node registration process that pairs the node identified by the entry that the user interacted with to the controller, and adds the node to the mesh network 145, as discussed in more detail with reference to FIG.3.

The controller 135 can be configured to identify and/or store one or more elements of the identifying information 120 (e.g., an address of the satellite 105, capabilities of the satellite 105, among others). The controller 135 can use information of the broadcast information 130 to determine whether the satellite 105 is compatible with the mesh network 145 such that the satellite 105 can communicate with nodes 140a-c to perform operations of the mesh network 145, such as extending a network range or transferring data from one node to another.

For example, when the identifying information is embedded in a Wi-Fi Protected Setup (WPS) packet, the identifying information can be encoded in the "device_name" information element, such that, when an enrollee packet is broadcast to all WPS capable access points (e.g., controllers) by a satellite node, the access points can extract this identifying information from the "device_name" information element, and use the information to identify the characteristics of the satellite node. More specifically, each of the access points can monitor for WPS Enrollee Seen packets, and detect unclaimed satellites based on identification and capability details that are included in the "device_name" information element of the WPS packet. Upon determining that an unclaimed satellite node is compatible with the mesh network, the satellite node can be included in the list of available nodes as discussed above, and the access point can await a request to add the available node to the mesh network before initiating the registration process.

In some implementations, a WPS mechanism is used to transfer data between a satellite node (e.g., the satellite 105) and a controller (e.g., the controller 135). For example, a satellite node can periodically attempt to connect to a controller by broadcasting a WPS Personal identification number (PIN) or other unique identifier. Satellite identification and capability details can be encoded in an element (e.g., "device_name" information element) of a WPS enrollee packet. The WPS enrollee packet can be broadcast to all WPS capable access points, including one or more controllers that control one or more mesh networks.

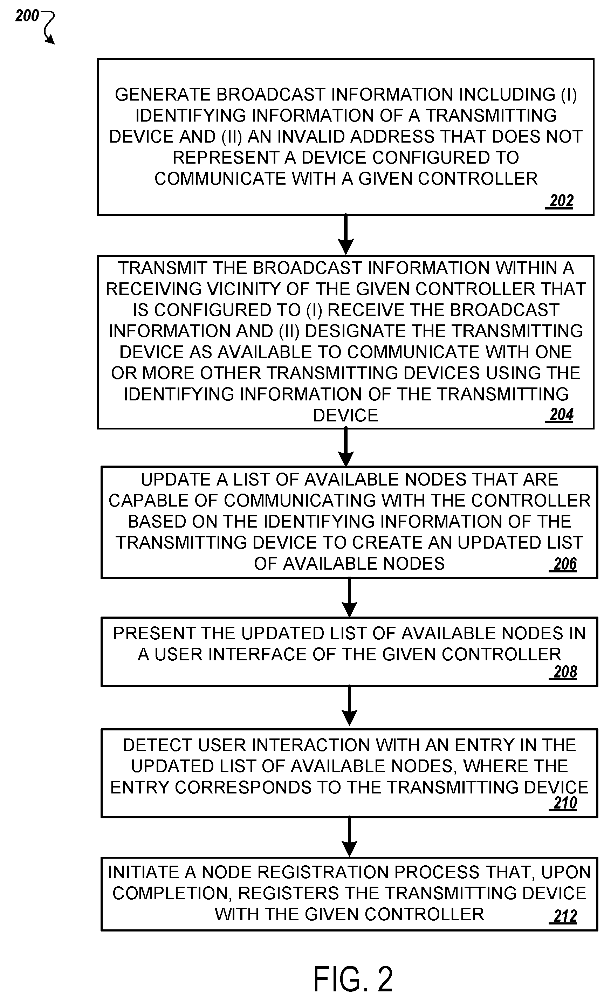

FIG.2 is a flow diagram illustrating an example process 200 for detecting capable satellites available for inclusion in a mesh network. The process 200 may be performed by one or more electronic systems, for example, the system 100 of FIG. 1.

The process 200 includes generating broadcast information including (i) identifying information of a transmitting device and (ii) an invalid address that does not represent a device configured to communicate with a given controller (202). For example, as discussed with reference to FIG. 1, the satellite 105 or another node can generate the broadcast information 130 including the invalid address 110 and the identifying information 120. The identifying information can include a device identifier and transmitting device capability details, which can indicate that the transmitting device is configured to operate as a satellite node in a mesh network.

In some implementations, the invalid address is in the form of a media access control (MAC) address or another type of device identifier. By using an invalid address, a controller that receives the broadcast information will not initiate a pairing process with the transmitting device since the invalid address does not represent a device that is configured to communicate with the controller, but the controller will still see the information, and be able to extract other information that can be presented in a user interface (e.g., identifying the transmitting device as an available node with which a pairing process can be initiated).

In some implementations, the invalid address is not associated with any device in the transmitting vicinity of the transmitting device. In some implementations, the invalid address is in the form of a media access control (MAC) address. The invalid device may not exist as a device and the invalid address can represent an arbitrary address that does not correspond to any device. The invalid device can be a device that is configured not to respond or not to configure a given node or satellite within a mesh network, e.g., the mesh network 145.

The process 200 includes transmitting the broadcast information within a receiving vicinity of the given controller that is configured to (i) receive the broadcast information and (ii) designate the transmitting device as available to communicate with one or more other transmitting devices using the identifying information of the transmitting device (204). For example, as discussed above with reference to FIG.1, the satellite 105 can transmit the broadcast information 130 in the signal 125 to the invalid device 115 and other receiving devices in a receiving vicinity, e.g., the controller 135. As discussed above, the broadcast information can be transmitted by performing a Wi-Fi Protected Setup (WPS) connection attempt using the invalid address.

The process 200 includes updating, by the given controller, a list of available nodes that are capable of communicating with the controller based on the identifying information of the transmitting device to create an updated list of available nodes (206). For example, the controller 135 can receive the broadcast information that was transmitted by the satellite 105, and extract the identifying information from the broadcast information 130. The controller 135 can then add a name or other identifying information representing the satellite 105 to the list of available nodes, which results in an updated list of available nodes.

The process 200 includes presenting, by the given controller, the updated list of available nodes in a user interface of the given controller (208). The user interface of the given controller can be physically attached to the given controller, or the user interface can be in another device with which the given controller communicates. For example, the controller 135 can communicate with a mobile device, tablet device, digital assistant, or another device that includes a user interface. In this example, the controller 135 can present the updated list of available nodes by transmitting data that causes the other device to present the updated list of available nodes in the user interface of the other device so that the list of available nodes is presented to a user of the other device.

The process 200 includes detecting, by the given controller, user interaction with an entry in the updated list of available nodes, where the entry corresponds to the transmitting device (210). For example, when a user taps on, clicks on, or otherwise interacts with an entry in the list of available nodes, the controller 135 can be provided with data identifying the entry with which the user interacted. In response to receiving that data, the controller 135 can determine that the entry interacted with corresponds to (e.g., identifies) the satellite 105.

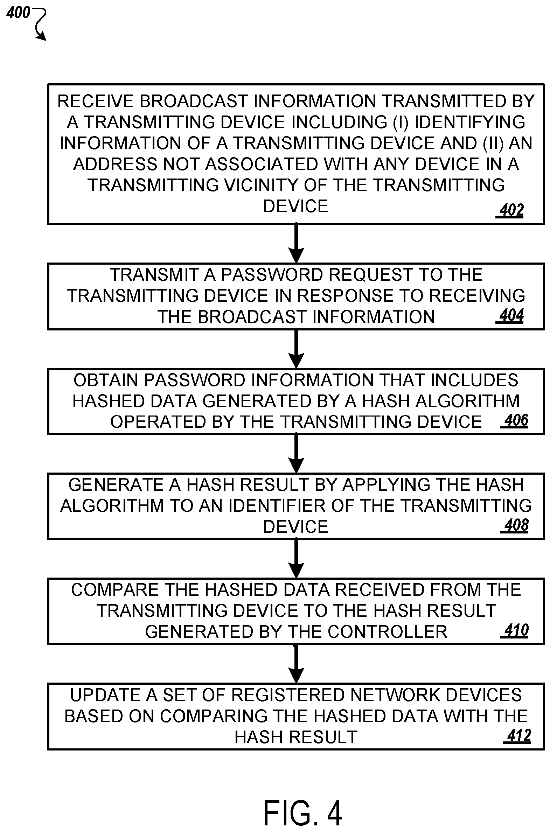

The process 200 includes initiating, by the given controller, a node registration process that, upon completion, registers the transmitting device with the given controller (212). For example, in response to detecting the user interaction with the entry and/or determining that the entry interacted with corresponds to the satellite 105, the controller 135 can begin a process to pair the satellite 105 with the controller 135 and/or mesh network 145. A process for registering a transmitting device with a controller is described below, with reference to FIGs. 3 and 4.

In some implementations, the process 200 includes adding the transmitting device to topology data for a mesh Wi-Fi network. For example, the controller 135 can generate one or more data structures relating information corresponding to nodes 140a-c. The controller 135 can add information corresponding to the satellite 105 to the one or more data structures. Information corresponding to a satellite or node can include, among others, an identifier, summary, digest of abilities, or operation schedules.

FIG.3 is a diagram showing an example system 300 for pairing an unclaimed mesh satellite with a mesh network, e.g., the mesh network 145. The mesh network 145 initially includes one or more nodes, e.g., nodes 140a-c. Using the broadcast information 130 provided by the satellite 105, the controller 135 can detect and associate the satellite 105 as a node in the mesh network 145. Associating the satellite 105 as a node in the mesh network 145 can include pairing the satellite 105 with the mesh network 145. Information of the newly added satellite 105, or the mesh network 145 generally, can be provided to a user device 340.

The controller 135 includes one or more processors configured to perform operations of a password request engine 305, a hash engine 325, a hash comparison engine 330, and a network update module 335. The password request engine 305 obtains information of the broadcast information 130 and generates a password request 310. In some implementations, the password request engine 305 obtains data of the broadcast information 130. For example, the password request engine 305 can obtain an address of the satellite 105 from the broadcast information 130. The password request engine 305 can initiate a WPS PIN procedure. The WPS PIN procedure can include generating the password request 310 and sending the password request 310 to the satellite 105.

In some implementations, a transmitting module of the controller 135 transmits data corresponding to the password request 310 to the satellite 105. The satellite 105 can obtain the password request 310 using a receiving module of the satellite 105. The satellite 105 can generate password information 320 in response to the password request 310. The satellite 105 generates the password information 320 using hash engine 315. The hash engine 315 can operate a hash function that operates on one or more elements of data, e.g., an address of the satellite 105, capabilities of the satellite 105, among others. In some implementations, the hash engine 315 operates a hash function that operates on one or more elements of data included in the broadcast information 130 or data that is stored in memory of the controller 135. The hash engine 315 can generate a PIN of the password information 320.

The satellite 105 transmits, using a transmitting module of the satellite 105, the password information 320 to the controller 135. The controller 135 receives the password information 320. In some implementations, the hash engine 325 of the controller 135 generates a hash result similar to the hash engine 315 of the satellite 105. For example, the hash engine 325 and the hash engine 315 can be configured to operate the same hash function. The controller 135 can generate a hash result using the hash engine 325 operating a hash function using data corresponding to the satellite 105 as input.

In some implementations, the satellite 105 and the controller 135 perform a particular password verification process specified by a protocol stored in memory of the satellite 105 and the controller 135. For example, the hash engine 315 of the satellite 105 can generate the password information 320 as a hash result of a hash function operating on an address of the satellite 105. The hash engine 325 can operate the same hash function to generate a hash result that, if the input for the satellite 105 and the controller 135 to the hash engine is equal, confirms the validity of the satellite 105 as the satellite detected by the controller 135 to be associated with the mesh network 145.

The hash comparison engine 330 of the controller 135 determines whether a hash result of the password information 320 matches a hash result generated by the hash engine 325. For example, as discussed, according to a particular protocol, the hash comparison engine 330 can determine if a hash result generated by the hash engine 325 matches a hash result included in the password information 320. If a hash result generated by the hash engine 325 matches a hash result included in the password information 320, the hash comparison engine 330 can generate a signal for the network update module 335 to update the mesh network 145 to include the satellite 105. If a hash result generated by the hash engine 325 does not match a hash result included in the password information 320, the hash comparison engine 330 can generate a signal for the network update module 335 to not update the mesh network 145 to include the satellite 105 or discard information for the satellite 105.

The mesh network 145 can be stored in memory of the controller 135. Details of devices operating as nodes in the mesh network 145 can be provided to one or more nodes of the mesh network so that the nodes can communicate data between one another. For example, when updating the mesh network to include the satellite 105, the controller 135 can provide details of the satellite 105, e.g., an address or capability information, to one or more nodes (e.g., 140a-c) in the mesh network.

In some implementations, the controller 135 transmits the password request 310 to the satellite 105 in response to receiving feedback (e.g., in a transmission from the device 340) from the device 340. For example, a user can interact with a graphical user interface (GUI) or other interface on the device 340. The device 340 can display data from the controller 135. The data can include information of the mesh network 145 including information of one or more nodes available to be added. The user can use an interface of the device 340 to select the satellite 105. The device 340, in response to the selection, can transmit data to the controller 135 indicating the selection by the user of the satellite 105. The controller 135 can send the password request 310 to the satellite 105 in response to receiving data from the device 340. After exchanging password information, the controller 135 can add the satellite 105 to the mesh network 145.

In some implementations, a user of the device 340, similar to the external device 155, selects the satellite 105 using an interface of the device 340. For example, the controller 135 can use the identifying information 120 to generate a selectable item for a user of the device 340 to select. The selectable item can be included in a list of available satellites provided to the device 340 (e.g., the list of available satellites 165). The selectable item can include one or more elements included in the identifying information 120 or one or more elements generated by the controller 135 using one or more elements included in the identifying information 120.

In some implementations, after a user of the device 340 selects the satellite 105, an initiation process occurs. The initiation process can be performed by one or more of the satellite 105 or the controller 135. The initiation process can include the controller 135 enabling a WPS-PIN service. The controller 135 can receive requests from one or more satellites or only the selected satellite 105. The satellite 105 can determine (e.g., using a client scanning process) that the controller 135 has enabled a WPS-PIN service.

In some implementations, the satellite 105 scans beacons to determine that the controller 135 has enabled a WPS-PIN service. The satellite 105 can identify the controller 135 by determining that the controller 135 has enabled a WPS-PIN service. Identifying the controller 135 can include identifying an address of the controller 135. The satellite 105 can send a connection request to the controller 135. The connection request can include one or more elements equivalent to the elements of the broadcast 130. The connection request can be directed to an address of the controller 135 instead of the invalid address 110. In some implementations, after the satellite 105 sends a connection request to the controller 135, the controller 135 sends a password request (e.g., the password request 310 shown in FIG.3).

In some implementations, a user initiates claiming of the satellite 105. For example, a user of the device 340 can interact with the device 340 (e.g., touch screen, button, among others) to initiate claiming the satellite 105 and associating the satellite 105 with the mesh network 145. In some implementations, the controller 135 provides one or more elements of the broadcast information 130 (e.g., an address of the satellite 105, one or more capabilities of the satellite 105, among others) to the device 340. The device 340 can be configured with transmission and receiving modules to transmit and receive signals from the controller 135 (e.g., before or after the controller 135 obtains the password information 320). The device 340 can be configured to display information of the broadcast information 130 to a user. The user can, using a display of data provided by the controller 135, initiate associating the satellite 105 by providing response data to the controller 135 indicating a user request to associate the satellite 105 with the mesh network 145.

FIG.4 is a flow diagram illustrating an example process for pairing an unclaimed mesh satellite with a mesh network. The process 400 may be performed by one or more electronic systems, for example, the system 300 of FIG.1.

The process 400 includes receiving broadcast information transmitted by a transmitting device including (i) identifying information of a transmitting device and (ii) an address not associated with any device in a transmitting vicinity of the transmitting device (402). For example, the controller 135 receives the broadcast information 130 from the satellite 105. The broadcast information 130 includes the invalid address 110. The invalid address 110 can be not associated with any device in a transmitting vicinity of the satellite 105.

In some implementations, the invalid address is not associated with any device in the transmitting vicinity of the transmitting device. In some implementations, the invalid address is in the form of a media access control (MAC) address. The invalid device may not exist as a device and the invalid address can represent an arbitrary address that does not correspond to any device. The invalid device can be a device that is configured not to respond or not to configure a given node or satellite within a mesh network, e.g., the mesh network 145.

In some implementations, the identifying information of the transmitting device includes a device identifier and transmitting device capability details. The identifying information can include a device identifier and transmitting device capability details, which can indicate that the transmitting device (e.g., the satellite 105) is configured to operate as a satellite node in a mesh network.

The process 400 includes transmitting a password request to the transmitting device in response to receiving the broadcast information (404). For example, the controller 135 provides the password request 310 to the satellite 105. The password request 310 can be a form of WPS PIN request for setting up the satellite 105. In some implementations, the satellite 105 includes Wi-Fi capabilities.

In some implementations, transmitting a password request to the transmitting device in response to receiving the broadcast information does not include registering the transmitting device with the controller. For example, the controller 135 can obtain data corresponding to the broadcast information 130 without registering the satellite 105. Registering can include adding the satellite to the mesh network 145 or recording information corresponding to the satellite 105 in one or more data structures corresponding to the mesh network.

The process 400 includes obtaining password information that includes hashed data generated by a hash algorithm operated by the transmitting device (406). For example, the controller 135 receives the password information 320. The password information 320 includes a hash result of the hash engine 315 operated by the satellite 105. The hash result can be a hash of an identifier of the satellite 105, e.g., a name, address, unique identifier, among others.

In some implementations, a controller obtains password information from a transmitting device responsive to a password request. For example, the controller 135 can provide the password request 310 to the satellite 105. The satellite 105 can provide the password information 320 to the controller 135. The controller 135 can obtain the password information 320.

The process 400 includes generating a hash result by applying the hash algorithm to an identifier of the transmitting device (408). For example, the hash engine 325 of the controller 135 generates a hash result. The hash result generated by the hash engine 325 can be a hash of an identifier of the satellite 105, e.g., a name, address, unique identifier, among others.

In some implementations, generating a hash result includes hashing a MAC address of the transmitting device. For example, the satellite 105 can transmit a MAC address as an identifier (e.g., the identifying information 120) of the satellite 105 to the controller 135. The controller 135 can perform a hashing operation on the MAC address to generate a hash result.

The process 400 includes comparing the hashed data received from the transmitting device to the hash result generated by the controller (410). For example, the hash comparison engine 330 of the controller 135 compares the hash value in the password information 320 with the hash value generated by the hash engine 325. Comparing can include comparing a first bit representing the hash value of the password information 320 with a first bit representing the hash value generated by the hash engine 325. Comparing can include comparing a second bit representing the hash value of the password information 320 with a second bit representing the hash value generated by the hash engine 325.

The process 400 includes updating a set of registered network devices based on comparing the hashed data with the hash result (412). For example, the hash comparison engine 330 can determine if the hash value generated by the hash engine 325 matches the hash value included in the password information 320. If they match, the hash comparison engine 330 can provide data to the network update module 335 indicating that the satellite 105 is to be added to the network 145. If they do not match, the network update module 335 can prevent the satellite 105 from being added to the network 145. Adding the satellite 105 to the network 145 can include updating a set of registered network devices to include the satellite 105. The set of registered network devices can include one or more other connected devices, e.g., nodes 140a-c.

In some implementations, the process 400 includes receiving user input requesting that the transmitting device be added as a node in a mesh network managed by the controller, where transmitting the password request is performed in response to receiving the user input. For example, the controller 135 can obtain input from a device, such as the device 340. The user can use an interface of the device 340 to select the satellite 105 to be added as a node in the mesh network 145. The device 340, in response to the selection, can transmit data to the controller 135 indicating the selection by the user of the satellite 105.

In some implementations, the process 400 includes adding the transmitting device to topology data for a mesh Wi-Fi network. For example, the controller 135 can generate one or more data structures relating information corresponding to nodes 140a-c. The controller 135 can add information corresponding to the satellite 105 to the one or more data structures. Information corresponding to a satellite or node can include, among others, an identifier, summary, digest of abilities, or operation schedules.

In some implementations, updating the set of registered network devices includes one or more actions. For example, updating the set of registered network devices can include registering the transmitting device in the set of registered network devices based on the comparison resulting in a match between the hashed data and the hashed result. Updating the set of registered network devices can include omitting the transmitting device from the set of registered network devices based on the comparison revealing a lack of the match between the hashed data and the hashed result.

In some implementations, operations performed by the system 100 or system 300 include associating (e.g., adding or pairing) satellites with a mesh network without the close proximity of a user. For example, a method for advertising mesh satellites (e.g., unclaimed or unassociated mesh satellites, extenders, among others) to a network controller (e.g., the controller 135) can be performed without requiring a user to have close physical proximity to a given satellite node to be associated with a network or obtain identifying information from or at the controller. The method can use a WPS mechanism to allow the controller to detect and claim newly deployed or otherwise unclaimed satellites. Detected nodes can be added to a topology of a network.

Typically, when deploying a mesh network (e.g., a mesh Wi-Fi network), satellite nodes, which may be referred to as extenders, must be claimed or linked to a controller. Unlike a wired network, where such association can be attained by physical cables, when wireless devices are overlapping in their coverage areas or areas of signal transmission or reception, devices require information indicating what nodes or devices are associated with a network for communicating on that given network. In some implementations, once a device or node is identified, a user can select the device or node to associate it with a network, such as a mesh network.

In some implementations, the satellite 105 uses a WPS mechanism to inform nearby controllers of its identity. An identity of the satellite 105 can be used, e.g., by the controller 135, to determine whether the satellite 105 should be associated, by a controller, with a given network, e.g., the network 145. In some implementations, by providing the broadcast information 130 with the invalid address 110, the satellite 105 allows for identification by the controller 135 automatically, prior to any association or joining of networks. Advantages of this automatic approach include: no Bluetooth interface is required (although a similar system could be configured to detect and join devices using Bluetooth transmissions, or other transmissions) allowing for cost reduction by eliminating an interface for a given node or device; no need for an installer (e.g., an installer of the satellite 105) to have close physical proximity to a mesh satellite to be associated or to create an association (such as required, in some cases, if Bluetooth was used for identification); no cloud connectivity is required for associating new device;

In some implementations, the satellite 105 periodically broadcasts signals, similar to the broadcast information 130. For example, the satellite 105 can broadcast the broadcast information 130 as a WPS PIN connection attempt. Details of the satellite 105 can be encoded in a WPS packet within the broadcast information 130. For example, satellite identification and capability details can be encoded in a WPS packet's device_name information element. The WPS enrollee packet can be broadcast (e.g., the broadcast information 130) to all WPS capable access points.

In some implementations, the controller 135 monitors for broadcasted signals. For example, the controller 135 can monitor a network for WPS Enrollee Seen packets. The controller 135 can detect unclaimed satellites based on identification and capability details provided in device_name information element as described herein. The controller 135 can add detected satellites to topology data (e.g., topology data for the network 145) for consumption (e.g., display, connection, query, among others) by user agents.

In some implementations, the system 100 or the system 300 does not use Bluetooth. For example, instead of using Bluetooth, a user application, or out of band communication, to help connect the satellite 105 with the controller 135, the satellite 105 can send the broadcast 140 as described herein. In this way, the satellite 105 do not need to be within Bluetooth receiving or transmission range of one another for the satellite 105 to be added to the network 145. In some implementations, the system 100 or the system 300 does not use wired interfaces between the satellite 105 and the controller 135. For example, if the satellite 105 and the controller 135 had wired interfaces, an initial wired configuration could be used to transfer identifying information. However, this would involve the inconvenience of a user physically connected the satellite 105 and the controller 135 with one or more wires. The controller 135 could be manually configured with this information. However, this would require manually configuring the controller 135 and would prevent newly added devices from joining that have not previously been configured within the controller 135. In contrast, the operations discussed in regard to the system 100 and the system 300 do not require these inconveniences.

In some implementations, the satellite 105 and the controller 135 communicate using a standard WPS protocol and MAC802.11 Wi-Fi drivers.

In some implementations, operations performed by the system 100 or system 300 include associating satellites with a mesh network without pre-provisioning, cabled connections, or the interaction of the user with the satellite (e.g., a physical or virtual button being pressed). For example, a secure method for transferring the mesh W-Fi network credentials from a controller, such as the controller 135, to a satellite, such as the satellite 105, can include one or more operations discussed in regard to FIG.3 and FIG.4. In some cases, the operations do not require pre-provisioning, cabled connections, or the interaction of a user with the satellite. Once credentials are transferred from the controller to the satellite, the satellite can join the network, such as the network 145.

Typically, satellite nodes that are not provisioned for a given network do not have Wi-Fi credentials to join the given network. Operations discussed in regard to FIG.3 and FIG.4 can be included in a secure method for the controller 135 to transfer credential information to satellites, such as the satellite 105. In some cases, the method doesn't require user intervention. In some cases, user intervention can be limited to having a user start the process with a communication sent to the controller. The process of transferring these credentials and the satellite joining the mesh network can be referred to as onboarding.

In some implementations, the system 300 performs a method to onboard the satellite 105. The system 300 can use WPS PIN exchange. For example, the satellite 105 and the controller 135 can automatically generate a PIN. The satellite 105 and the controller 135 can automatically generate a PIN using a common algorithm that they both know. In some implementations, the common algorithm includes processing information corresponding to the satellite 105 of the controller 135. For example, the common algorithm can include generating a hash result, such as the hash result generated by the hash engine 315 or the hash engine 325. Using a common algorithm can ensure that only satellite nodes that know, or have data representing the algorithm stored in memory, can get credentials to join a network, such as the network 145.

In some implementations, network credentials are exchanged using a PIN generated by the satellite 105 and the controller 135. For example, network credentials for the satellite 105 to join the network 145 can be sent within cryptographically hashed data where a key to decrypt the cryptographically hashed data includes the PIN generated by the satellite 105 and the controller 135. The PIN can include a hash result generated by the hash engine 315 or the hash engine 325.

In some implementations, instead of using a fixed PIN, the satellite 105 or the controller 135 uses a variable to generate a PIN. For example, the satellite 105 or the controller 135 can generate a PIN using a cryptographic hash engine that cryptographically hashes data. The satellite 105 or the controller 135 can provide a variable (e.g., client information, the identifying information 120, among others) to the cryptographic hash engine to cryptographically hash the provided variable. The cryptographically hashed variable can be used by the satellite 105 or the controller 135 as a PIN for identification, authentication, or to encrypt network credentials (e.g., shared between the satellite 105 and the controller 135). The cryptographically hashed variable can be included in the password information 320. The cryptographically hashed variable can be generated by the controller 135. In some implementations, a cryptographically hashed variable is used by the satellite 105 and the controller 135 as a shared secret (PIN). In some implementations, using a PIN generated as a hash of a variable prevents the use of static PINs. For example, instead of using static PINs, the satellite 105 and the controller 135 can use a variable to generate a PIN that, in some cases, is not stored and can therefore reduce storage requirements and decrease security risks, e.g., of storing a PIN database.

In some implementations, a user initiates claiming of the satellite 105. For example, a user operating the device 340 can provide data to the controller 135 to claim the satellite 105. The controller 135 can provide information of the detected satellite 105 to the user device 340 for display. The controller 135 can initiate Wi-Fi WPS PIN procedure to the satellite 105. The controller 135 can confirm a PIN provided by the satellite 105 (e.g., using the hash comparison engine 330). In some implementations, the controller 135 provides credential information to the satellite 105. For example, the controller 135 can send credential information to the satellite 105 using the PIN provided by the satellite 105 and confirmed by the controller 135 in a data transmission signal.

In some implementations, the satellite 105 obtains credentials from the controller 135 to join the network 145. For example, the satellite 105 can monitor for WPS PIN, or other communications, using periodic scanning, e.g., periodic Wi-Fi scanning. The satellite 105 can send a PIN generated by the satellite 105 to the controller 135 as described in reference to FIG.3. In some implementations, the satellite 105 connects to the network 145 using credentials provided by the controller 135. For example, the satellite 105 can obtain credentials from the controller 135. The satellite 105 can use the credentials to connect to one or more devices using a network protocol, such as Wi-Fi and be onboarded to one or more mesh networks.

In some implementations, the controller 135 provides credentials to the satellite 105 without one or more elements typically used to provide credentials. For example, these elements, which are not required by methods discussed herein, can include: cloud connectivity needed for associating new mesh satellite with a mesh controller; pre-provisioning Wi-Fi mesh credentials; cable connections; WPS button (e.g., a physical or virtual button to be pressed by a user to connect a given satellite to a network); "soft" button presses that can be clicked on a web page for controlling a controller; physical access (e.g., to the satellite or controller) by installer (e.g., WPS button press).

Processes disclosed herein can replace a physical button process for pairing controllers and satellites. For example, a physical button process can include one or more users pressing a physical button on each of a controller and a satellite within a determined threshold (e.g., 2 minutes in a WPS-PBC process) to connect the controller and the satellite in a network, such as a mesh network. Processes disclosed herein require less manual effort and can improve efficiency of setting up a network, make dynamic networking more efficient and feasible (e.g., adding and dropping satellites for multiple networks operating in a same location), among others.

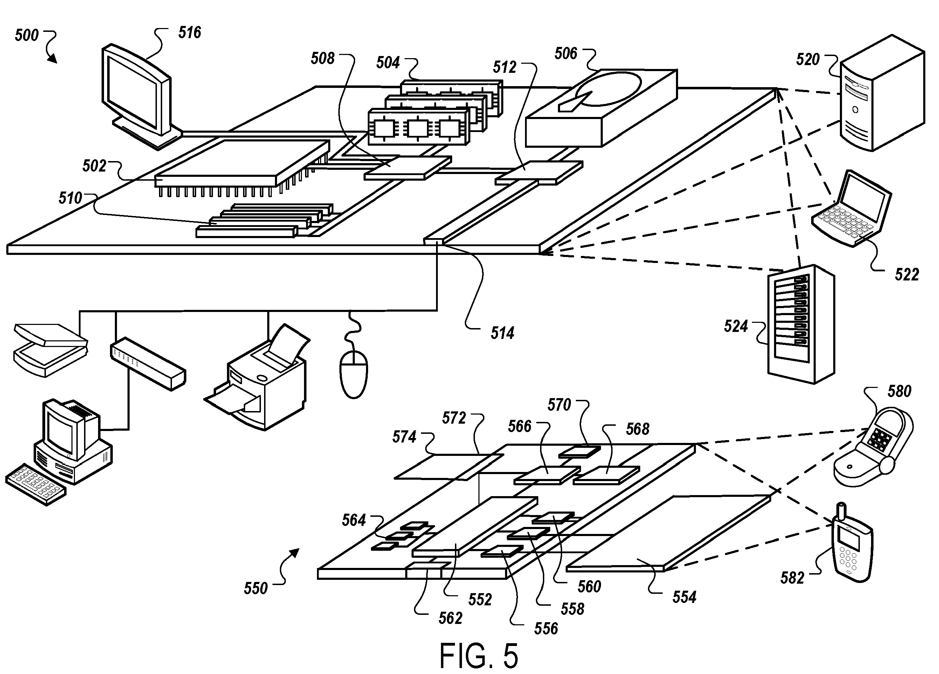

FIG.5 is a diagram illustrating an example computing system used for provisioning satellite nodes for communication in a mesh network. The computing system includes computing device 500 and a mobile computing device 550 that can be used to implement the techniques described herein. For example, one or more components of the system 100 could be an example of the computing device 500 or the mobile computing device 550, such as a computer system implementing the satellite 105 or the controller 135, devices that access information from the satellite 105 or the controller 135, or a server that accesses or stores information regarding the operations performed by the satellite 105 or the controller 135.

The computing device 500 is intended to represent various forms of digital computers, such as laptops, desktops, workstations, personal digital assistants, servers, blade servers, mainframes, and other appropriate computers. The mobile computing device 550 is intended to represent various forms of mobile devices, such as personal digital assistants, cellular telephones, smart-phones, mobile embedded radio systems, radio diagnostic computing devices, and other similar computing devices. The components shown here, their connections and relationships, and their functions, are meant to be examples only, and are not meant to be limiting.

The computing device 500 includes a processor 502, a memory 504, a storage device 506, a high-speed interface 508 connecting to the memory 504 and multiple high-speed expansion ports 510, and a low-speed interface 512 connecting to a low-speed expansion port 514 and the storage device 506. Each of the processor 502, the memory 504, the storage device 506, the high-speed interface 508, the high-speed expansion ports 510, and the low-speed interface 512, are interconnected using various busses, and may be mounted on a common motherboard or in other manners as appropriate. The processor 502 can process instructions for execution within the computing device 500, including instructions stored in the memory 504 or on the storage device 506 to display graphical information for a GUI on an external input/output device, such as a display 516 coupled to the high-speed interface 508. In other implementations, multiple processors and/or multiple buses may be used, as appropriate, along with multiple memories and types of memory. In addition, multiple computing devices may be connected, with each device providing portions of the operations (e.g., as a server bank, a group of blade servers, or a multi-processor system). In some implementations, the processor 502 is a single threaded processor. In some implementations, the processor 502 is a multi-threaded processor. In some implementations, the processor 502 is a quantum computer.

The memory 504 stores information within the computing device 500. In some implementations, the memory 504 is a volatile memory unit or units. In some implementations, the memory 504 is a non-volatile memory unit or units. The memory 504 may also be another form of computer-readable medium, such as a magnetic or optical disk.

The storage device 506 is capable of providing mass storage for the computing device 500. In some implementations, the storage device 506 may be or include a computer-readable medium, such as a floppy disk device, a hard disk device, an optical disk device, or a tape device, a flash memory or other similar solid-state memory device, or an array of devices, including devices in a storage area network or other configurations. Instructions can be stored in an information carrier. The instructions, when executed by one or more processing devices (for example, processor 502), perform one or more methods, such as those described above. The instructions can also be stored by one or more storage devices such as computer- or machine readable mediums (for example, the memory 504, the storage device 506, or memory on the processor 502).The high-speed interface 508 manages bandwidth-intensive operations for the computing device 500, while the low-speed interface 512 manages lower bandwidth-intensive operations. Such allocation of functions is an example only. In some implementations, the high speed interface 508 is coupled to the memory 504, the display 516 (e.g., through a graphics processor or accelerator), and to the high-speed expansion ports 510, which may accept various expansion cards (not shown). In the implementation, the low-speed interface 512 is coupled to the storage device 506 and the low-speed expansion port 514. The low-speed expansion port 514, which may include various communication ports (e.g., USB, Bluetooth, Ethernet, wireless Ethernet) may be coupled to one or more input/output devices, such as a keyboard, a pointing device, a scanner, or a networking device such as a switch or router, e.g., through a network adapter.

The computing device 500 may be implemented in a number of different forms, as shown in the figure. For example, it may be implemented as a standard server 520, or multiple times in a group of such servers. In addition, it may be implemented in a personal computer such as a laptop computer 522. It may also be implemented as part of a rack server system 524. Alternatively, components from the computing device 500 may be combined with other components in a mobile device, such as a mobile computing device 550. Each of such devices may include one or more of the computing device 500 and the mobile computing device 550, and an entire system may be made up of multiple computing devices communicating with each other.

The mobile computing device 550 includes a processor 552, a memory 564, an input/output device such as a display 554, a communication interface 566, and a transceiver 568, among other components. The mobile computing device 550 may also be provided with a storage device, such as a micro-drive or other device, to provide additional storage. Each of the processor 552, the memory 564, the display 554, the communication interface 566, and the transceiver 568, are interconnected using various buses, and several of the components may be mounted on a common motherboard or in other manners as appropriate.

The processor 552 can execute instructions within the mobile computing device 550, including instructions stored in the memory 564. The processor 552 may be implemented as a chipset of chips that include separate and multiple analog and digital processors. The processor 552 may provide, for example, for coordination of the other components of the mobile computing device 550, such as control of user interfaces, applications run by the mobile computing device 550, and wireless communication by the mobile computing device 550.

The processor 552 may communicate with a user through a control interface 558 and a display interface 556 coupled to the display 554. The display 554 may be, for example, a TFT (Thin-Film-Transistor Liquid Crystal Display) display or an OLED (Organic Light Emitting Diode) display, or other appropriate display technology. The display interface 556 may include appropriate circuitry for driving the display 554 to present graphical and other information to a user. The control interface 558 may receive commands from a user and convert them for submission to the processor 552. In addition, an external interface 562 may provide communication with the processor 552, so as to enable near area communication of the mobile computing device 550 with other devices. The external interface 562 may provide, for example, for wired communication in some implementations, or for wireless communication in other implementations, and multiple interfaces may also be used.

The memory 564 stores information within the mobile computing device 550. The memory 564 can be implemented as one or more of a computer-readable medium or media, a volatile memory unit or units, or a non-volatile memory unit or units. An expansion memory 574 may also be provided and connected to the mobile computing device 550 through an expansion interface 572, which may include, for example, a SIMM (Single In Line Memory Module) card interface. The expansion memory 574 may provide extra storage space for the mobile computing device 550, or may also store applications or other information for the mobile computing device 550. Specifically, the expansion memory 574 may include instructions to carry out or supplement the processes described above, and may include secure information also. Thus, for example, the expansion memory 574 may be provide as a security module for the mobile computing device 550, and may be programmed with instructions that permit secure use of the mobile computing device 550. In addition, secure applications may be provided via the SIMM cards, along with additional information, such as placing identifying information on the SIMM card in a non-hackable manner.

The memory may include, for example, flash memory and/or NVRAM memory (nonvolatile random access memory), as discussed below. In some implementations, instructions are stored in an information carrier such that the instructions, when executed by one or more processing devices (for example, processor 552), perform one or more methods, such as those described above. The instructions can also be stored by one or more storage devices, such as one or more computer- or machine-readable mediums (for example, the memory 564, the expansion memory 574, or memory on the processor 552). In some implementations, the instructions can be received in a propagated signal, for example, over the transceiver 568 or the external interface 562.

The mobile computing device 550 may communicate wirelessly through the communication interface 566, which may include digital signal processing circuitry in some cases. The communication interface 566 may provide for communications under various modes or protocols, such as GSM voice calls (Global System for Mobile communications), SMS (Short Message Service), EMS (Enhanced Messaging Service), or MMS messaging (Multimedia Messaging Service), CDMA (code division multiple access), TDMA (time division multiple access), PDC (Personal Digital Cellular), WCDMA (Wideband Code Division Multiple Access), CDMA2000, or GPRS (General Packet Radio Service), LTE, 5G/6G cellular, among others. Such communication may occur, for example, through the transceiver 568 using a radio frequency. In addition, short-range communication may occur, such as using a Bluetooth, Wi-Fi, or other such transceiver (not shown). In addition, a GPS (Global Positioning System) receiver module 570 may provide additional navigation- and location-related wireless data to the mobile computing device 550, which may be used as appropriate by applications running on the mobile computing device 550.

The mobile computing device 550 may also communicate audibly using an audio codec 560, which may receive spoken information from a user and convert it to usable digital information. The audio codec 560 may likewise generate audible sound for a user, such as through a speaker, e.g., in a handset of the mobile computing device 550. Such sound may include sound from voice telephone calls, may include recorded sound (e.g., voice messages, music files, among others) and may also include sound generated by applications operating on the mobile computing device 550.

The mobile computing device 550 may be implemented in a number of different forms, as shown in the figure. For example, it may be implemented as a cellular telephone 580. It may also be implemented as part of a smart-phone 582, personal digital assistant, or other similar mobile device.

A number of implementations have been described. Nevertheless, it will be understood that various modifications may be made. For example, various forms of the flows shown above may be used, with steps re-ordered, added, or removed.

Embodiments of the invention and all of the functional operations described in this specification can be implemented in digital electronic circuitry, or in computer software, firmware, or hardware, including the structures disclosed in this specification and their structural equivalents, or in combinations of one or more of them. Embodiments of the invention can be implemented as one or more computer program products, e.g., one or more modules of computer program instructions encoded on a computer readable medium for execution by, or to control the operation of, data processing apparatus. The computer readable medium can be a machine-readable storage device, a machine-readable storage substrate, a memory device, a composition of matter effecting a machine-readable propagated signal, or a combination of one or more of them. The term "data processing apparatus" encompasses all apparatus, devices, and machines for processing data, including by way of example a programmable processor, a computer, or multiple processors or computers. The apparatus can include, in addition to hardware, code that creates an execution environment for the computer program in question, e.g., code that constitutes processor firmware, a protocol stack, a database management system, an operating system, or a combination of one or more of them. A propagated signal is an artificially generated signal, e.g., a machine-generated electrical, optical, or electromagnetic signal that is generated to encode information for transmission to suitable receiver apparatus.

A computer program (also known as a program, software, software application, script, or code) can be written in any form of programming language, including compiled or interpreted languages, and it can be deployed in any form, including as a stand alone program or as a module, component, subroutine, or other unit suitable for use in a computing environment. A computer program does not necessarily correspond to a file in a file system. A program can be stored in a portion of a file that holds other programs or data (e.g., one or more scripts stored in a markup language document), in a single file dedicated to the program in question, or in multiple coordinated files (e.g., files that store one or more modules, sub programs, or portions of code). A computer program can be deployed to be executed on one computer or on multiple computers that are located at one site or distributed across multiple sites and interconnected by a communication network.

The processes and logic flows described in this specification can be performed by one or more programmable processors executing one or more computer programs to perform functions by operating on input data and generating output. The processes and logic flows can also be performed by, and apparatus can also be implemented as, special purpose logic circuitry, e.g., an FPGA (field programmable gate array) or an ASIC (application specific integrated circuit).

Processors suitable for the execution of a computer program include, by way of example, both general and special purpose microprocessors, and any one or more processors of any kind of digital computer. Generally, a processor will receive instructions and data from a read only memory or a random access memory or both. The essential elements of a computer are a processor for performing instructions and one or more memory devices for storing instructions and data. Generally, a computer will also include, or be operatively coupled to receive data from or transfer data to, or both, one or more mass storage devices for storing data, e.g., magnetic, magneto optical disks, or optical disks. However, a computer need not have such devices. Moreover, a computer can be embedded in another device, e.g., a tablet computer, a mobile telephone, a personal digital assistant (PDA), a mobile audio player, a Global Positioning System (GPS) receiver, to name just a few. Computer readable media suitable for storing computer program instructions and data include all forms of nonvolatile memory, media and memory devices, including by way of example semiconductor memory devices, e.g., EPROM, EEPROM, and flash memory devices; magnetic disks, e.g., internal hard disks or removable disks; magneto optical disks; and CD ROM and DVD-ROM disks. The processor and the memory can be supplemented by, or incorporated in, special purpose logic circuitry.

To provide for interaction with a user, embodiments of the invention can be implemented on a computer having a display device, e.g., a CRT (cathode ray tube) or LCD (liquid crystal display) monitor, for displaying information to the user and a keyboard and a pointing device, e.g., a mouse or a trackball, by which the user can provide input to the computer. Other kinds of devices can be used to provide for interaction with a user as well; for example, feedback provided to the user can be any form of sensory feedback, e.g., visual feedback, auditory feedback, or tactile feedback; and input from the user can be received in any form, including acoustic, speech, or tactile input.

Embodiments of the invention can be implemented in a computing system that includes a back end component, e.g., as a data server, or that includes a middleware component, e.g., an application server, or that includes a front end component, e.g., a client computer having a graphical user interface or a Web browser through which a user can interact with an implementation of the invention, or any combination of one or more such back end, middleware, or front end components. The components of the system can be interconnected by any form or medium of digital data communication, e.g., a communication network. Examples of communication networks include a local area network ("LAN") and a wide area network ("WAN"), e.g., the Internet.

The computing system can include clients and servers. A client and server are generally remote from each other and typically interact through a communication network. The relationship of client and server arises by virtue of computer programs running on the respective computers and having a client-server relationship to each other.

Certain features that are described in this specification in the context of separate embodiments can also be implemented in combination in a single embodiment. Conversely, various features that are described in the context of a single embodiment can also be implemented in multiple embodiments separately or in any suitable subcombination.

Similarly, while operations are depicted in the drawings in a particular order, this should not be understood as requiring that such operations be performed in the particular order shown or in sequential order, or that all illustrated operations be performed, to achieve desirable results. In certain circumstances, multitasking and parallel processing may be advantageous. Moreover, the separation of various system components in the embodiments described above should not be understood as requiring such separation in all embodiments, and it should be understood that the described program components and systems can generally be integrated together in a single software product or packaged into multiple software products.

In each instance where an HTML file is mentioned, other file types or formats may be substituted. For instance, an HTML file may be replaced by an XML, JSON, plain text, or other types of files. Moreover, where a table or hash table is mentioned, other data structures (such as spreadsheets, relational databases, or structured files) may be used.

Particular embodiments of the invention have been described.

## Claims

1. A method comprising:
- receiving (402), by a wireless receiver of a controller, broadcast information transmitted by a transmitting device, wherein the broadcast information includes (i) identifying information of the transmitting device and (ii) an invalid address that does not represent a device configured to communicate with a given controller, wherein receipt of the invalid address is an indication that the device is within the communications range of the controller, and the controller using the identifying information to add the device to a list of devices that are available to be added to a mesh network of the controller;
- transmitting (404), by the controller and without registering the transmitting device with the controller, a password request to the transmitting device in response to receiving the broadcast information;
- obtaining (406), by the controller and from the transmitting device responsive to the password request, password information that includes hashed data generated by a hash algorithm operated by the transmitting device;
- generating (408), by the controller, a hash result by applying the hash algorithm to an identifier of the transmitting device;
- comparing (410), by the controller, the hashed data received from the transmitting device to the hash result generated by the controller;
- updating (412), by the controller, a set of registered network devices based on comparing the hashed data with the hash result, including:
- registering, by the controller, the transmitting device in the set of registered network devices based on the comparison resulting in a match between the hashed data and the hashed result; and
- omitting, by the controller, the transmitting device from the set of registered network devices based on the comparison revealing a lack of the match between the hashed data and the hashed result.

2. The method of claim 1, wherein the invalid address is not associated with any device in a transmitting vicinity of the transmitting device, and is in a form of a media access control, MAC, address.

3. The method according of any of the preceding claims, comprising enabling a Wi-Fi Protected Setup Personal Identification Number, WPS-PIN, service in response to receiving the broadcast information.

4. The method according of any of the preceding claims, wherein generating the hash result by applying the hash algorithm comprises:
- hashing a MAC address of the transmitting device.

5. The method according of any of the preceding claims, wherein the identifying information of the transmitting device includes a device identifier and transmitting device capability details.

6. The method of claim 5, wherein the transmitting device capability details indicate that the transmitting device is configured to operate as a satellite node in a mesh network.

7. The method according of any of the preceding claims, further comprising:
- receiving, by the controller, user input requesting that the transmitting device be added as a node in a mesh network managed by the controller, wherein transmitting the password request is performed in response to receiving the user input.

8. The method according of any of the preceding claims, further comprising:
- adding the transmitting device to topology data for a mesh Wi-Fi network.

9. A non-transitory computer-readable medium storing one or more instructions executable by a computer system to perform operations comprising:
- receiving, by a wireless receiver of a controller, broadcast information transmitted by a transmitting device, wherein the broadcast information includes (i) identifying information of the transmitting device and (ii) an invalid address that does not represent a device configured to communicate with a given controller, wherein receipt of the invalid address is an indication that the device is within the communications range of the controller, and the controller using the identifying information to add the device to a list of devices that are available to be added to a mesh network of the controller;
- transmitting, by the controller and without registering the transmitting device with the controller, a password request to the transmitting device in response to receiving the broadcast information;
- obtaining, by the controller and from the transmitting device responsive to the password request, password information that includes hashed data generated by a hash algorithm operated by the transmitting device;
- generating, by the controller, a hash result by applying the hash algorithm to an identifier of the transmitting device;
- comparing, by the controller, the hashed data received from the transmitting device to the hash result generated by the controller;
- updating, by the controller, a set of registered network devices based on comparing the hashed data with the hash result, including:
- registering, by the controller, the transmitting device in the set of registered network devices based on the comparison resulting in a match between the hashed data and the hashed result; and
- omitting, by the controller, the transmitting device from the set of registered network devices based on the comparison revealing a lack of the match between the hashed data and the hashed result.

10. The medium of claim 9, wherein the invalid address is not associated with any device in a transmitting vicinity of the transmitting device, and is in a form of a media access control, MAC, address.

11. The medium according to any of claims 9 or 10, wherein the operations comprise enabling a Wi-Fi Protected Setup Personal Identification Number, WPS-PIN, service in response to receiving the broadcast information.

12. The medium according to any of claims 9 to 11, wherein generating the hash result by applying the hash algorithm comprises:
- hashing a MAC address of the transmitting device.

13. The medium according to any of claims 9 to 12, wherein the identifying information of the transmitting device includes a device identifier and transmitting device capability details.

14. The medium of claim 13, wherein the transmitting device capability details indicate that the transmitting device is configured to operate as a satellite node in a mesh network.

15. The medium according to any of claims 9 to 14, wherein the operations comprise:
- receiving, by the controller, user input requesting that the transmitting device be added as a node in a mesh network managed by the controller, wherein transmitting the password request is performed in response to receiving the user input.

16. The medium according to any of claims 9 to 15, wherein the operations comprise:
- adding the transmitting device to topology data for a mesh Wi-Fi network.

17. A system, comprising:
- one or more processors; and
- machine-readable media interoperably coupled with the one or more processors and storing one or more instructions that, when executed by the one or more processors, perform operations comprising:
- receiving, by a wireless receiver of a controller, broadcast information transmitted by a transmitting device, wherein the broadcast information includes (i) identifying information of the transmitting device and (ii) an invalid address that does not represent a device configured to communicate with a given controller, wherein receipt of the invalid address is an indication that the device is within the communications range of the controller, and the controller using the identifying information to add the device to a list of devices that are available to be added to a mesh network of the controller;
- transmitting, by the controller and without registering the transmitting device with the controller, a password request to the transmitting device in response to receiving the broadcast information;
- obtaining, by the controller and from the transmitting device responsive to the password request, password information that includes hashed data generated by a hash algorithm operated by the transmitting device;
- generating, by the controller, a hash result by applying the hash algorithm to an identifier of the transmitting device;
- comparing, by the controller, the hashed data received from the transmitting device to the hash result generated by the controller;
- updating, by the controller, a set of registered network devices based on comparing the hashed data with the hash result, including:
- registering, by the controller, the transmitting device in the set of registered network devices based on the comparison resulting in a match between the hashed data and the hashed result; and
- omitting, by the controller, the transmitting device from the set of registered network devices based on the comparison revealing a lack of the match between the hashed data and the hashed result.

18. The system of claim 17, wherein the invalid address is not associated with any device in a transmitting vicinity of the transmitting device, and is in a form of a media access control, MAC, address.

19. The system according to any of claims 17 or 18, wherein the operations comprise enabling a Wi-Fi Protected Setup Personal Identification Number, WPS-PIN, service in response to receiving the broadcast information.

20. The system according to any of claims 17 to 19, wherein generating the hash result by applying the hash algorithm comprises:
- hashing a MAC address of the transmitting device.

## Patentansprüche

1. Verfahren, umfassend:
- Empfangen (402), durch einen drahtlosen Empfänger einer Steuerung, von durch eine sendende Vorrichtung übertragenen Broadcast-Informationen, wobei die Broadcast-Informationen (i) Identifizierungsinformationen der sendenden Vorrichtung und (ii) eine ungültige Adresse umfassen, die keine für die Kommunikation mit einer Steuerung ausgelegte Vorrichtung darstellt, wobei das Empfangen der ungültigen Adresse ein Hinweis darauf ist, dass sich die Vorrichtung innerhalb der Kommunikationsreichweite der Steuerung befindet, und wobei die Steuerung die Identifizierungsinformationen verwendet, um die Vorrichtung zu einer Liste von Vorrichtungen hinzuzufügen, die zum Hinzufügen zu einem Mesh-Netzwerk der Steuerung verfügbar sind;
- Übertragen (404), durch die Steuerung und ohne Registrieren der sendenden Vorrichtung bei der Steuerung, einer Passwortanforderung an die sendende Vorrichtung als Reaktion auf das Empfangen der Broadcast-Informationen;
- Erhalten (406), durch die Steuerung und von der auf die Passwortanforderung reagierenden sendenden Vorrichtung, von Passwortinformationen, die gehashte Daten beinhalten, welche durch einen von der sendenden Vorrichtung betriebenen Hash-Algorithmus erzeugt wurden;
- Erzeugen (408), durch die Steuerung, eines Hash-Ergebnisses durch Anwenden des Hash-Algorithmus auf eine Kennung der sendenden Vorrichtung;
- Vergleichen (410), durch die Steuerung, der von der sendenden Vorrichtung empfangenen gehashten Daten mit dem von der Steuerung erzeugten Hash-Ergebnis;
- Aktualisieren (412), durch die Steuerung, eines Satzes registrierter Netzwerkvorrichtungen basierend auf dem Vergleichen der gehashten Daten mit dem Hash-Ergebnis, umfassend:
- Registrieren, durch die Steuerung, der sendenden Vorrichtung in dem Satz registrierter Netzwerkvorrichtungen basierend darauf, dass das Vergleichen eine Übereinstimmung zwischen den gehashten Daten und dem Hash-Ergebnis ergibt; und
- Auslassen, durch die Steuerung, der sendenden Vorrichtung aus dem Satz registrierter Netzwerkvorrichtungen basierend darauf, dass das Vergleichen offenbart, dass die Übereinstimmung zwischen den gehashten Daten und dem Hash-Ergebnis fehlt.

2. Verfahren nach Anspruch 1, wobei die ungültige Adresse keiner Vorrichtung in einer sendenden Umgebung der sendenden Vorrichtung zugeordnet ist und in Form einer Medienzugriffsteuerungsadresse, MAC-Adresse, vorliegt.

3. Verfahren nach einem der vorhergehenden Ansprüche, umfassend das Aktivieren eines Wi-Fi Protected Setup Personal Identification Number-Dienstes, WPS-PIN-Dienstes, als Reaktion auf das Empfangen der Broadcast-Informationen.

4. Verfahren nach einem der vorhergehenden Ansprüche, wobei das Erzeugen des Hash-Ergebnisses durch Anwenden des Hash-Algorithmus umfasst:
- Hashen einer MAC-Adresse der sendenden Vorrichtung.

5. Verfahren nach einem der vorhergehenden Ansprüche, wobei die Identifizierungsinformationen der sendenden Vorrichtung eine Vorrichtungskennung und Fähigkeitsdetails der sendenden Vorrichtung umfassen.

6. Verfahren nach Anspruch 5, wobei die Fähigkeitsdetails der sendenden Vorrichtung anzeigen, dass die sendende Vorrichtung dazu ausgelegt ist, als Satellitenknoten in einem Mesh-Netzwerk zu arbeiten.

7. Verfahren nach einem der vorhergehenden Ansprüche, ferner umfassend:
- Empfangen, durch die Steuerung, von Benutzereingaben, die anfordern, dass die sendende Vorrichtung als Knoten in ein von der Steuerung verwaltetes Mesh-Netzwerk hinzugefügt wird, wobei das Übertragen der Passwortanforderung als Reaktion auf das Empfangen der Benutzereingaben durchgeführt wird.

8. Verfahren nach einem der vorhergehenden Ansprüche, ferner umfassend:
- Hinzufügen der sendenden Vorrichtung zu Topologiedaten für ein Mesh-Wi-Fi-Netzwerk.

9. Nichtflüchtiges, computerlesbares Medium, das eine oder mehrere Anweisungen speichert, die von einem Computersystem ausführbar sind, um Operationen auszuführen, umfassend:
- Empfangen, durch einen drahtlosen Empfänger einer Steuerung, von durch eine sendende Vorrichtung übertragenen Broadcast-Informationen, wobei die Broadcast-Informationen (i) Identifizierungsinformationen der sendenden Vorrichtung und (ii) eine ungültige Adresse umfassen, die keine für die Kommunikation mit einer Steuerung ausgelegte Vorrichtung darstellt, wobei das Empfangen der ungültigen Adresse ein Hinweis darauf ist, dass sich die Vorrichtung innerhalb der Kommunikationsreichweite der Steuerung befindet, und wobei die Steuerung die Identifizierungsinformationen verwendet, um die Vorrichtung zu einer Liste von Vorrichtungen hinzuzufügen, die zum Hinzufügen zu einem Mesh-Netzwerk der Steuerung verfügbar sind;
- Übertragen, durch die Steuerung und ohne Registrieren der sendenden Vorrichtung bei der Steuerung, einer Passwortanforderung an die sendende Vorrichtung als Reaktion auf das Empfangen der Broadcast-Informationen;
- Erhalten, durch die Steuerung und von der auf die Passwortanforderung reagierenden sendenden Vorrichtung, von Passwortinformationen, die gehashte Daten beinhalten, welche durch einen von der sendenden Vorrichtung betriebenen Hash-Algorithmus erzeugt wurden;
- Erzeugen, durch die Steuerung, eines Hash-Ergebnisses durch Anwenden des Hash-Algorithmus auf eine Kennung der sendenden Vorrichtung;
- Vergleichen, durch die Steuerung, der von der sendenden Vorrichtung empfangenen gehashten Daten mit dem von der Steuerung erzeugten Hash-Ergebnis;
- Aktualisieren, durch die Steuerung, eines Satzes registrierter Netzwerkvorrichtungen basierend auf dem Vergleichen der gehashten Daten mit dem Hash-Ergebnis, umfassend:
- Registrieren, durch die Steuerung, der sendenden Vorrichtung in dem Satz registrierter Netzwerkvorrichtungen basierend darauf, dass das Vergleichen eine Übereinstimmung zwischen den gehashten Daten und dem Hash-Ergebnis ergibt; und
- Auslassen, durch die Steuerung, der sendenden Vorrichtung aus dem Satz registrierter Netzwerkvorrichtungen basierend darauf, dass das Vergleichen offenbart, dass die Übereinstimmung zwischen den gehashten Daten und dem Hash-Ergebnis fehlt.

10. Medium nach Anspruch 9, wobei die ungültige Adresse keiner Vorrichtung in einer sendenden Umgebung der sendenden Vorrichtung zugeordnet ist und in Form einer Medienzugriffsteuerungsadresse, MAC-Adresse, vorliegt.

11. Medium nach einem der Ansprüche 9 oder 10, wobei die Operationen das Aktivieren eines Wi-Fi Protected Setup Personal Identification Number-Dienstes, WPS-PIN-Dienstes, als Reaktion auf das Empfangen der Broadcast-Informationen umfassen.

12. Medium nach einem der Ansprüche 9 bis 11, wobei das Erzeugen des Hash-Ergebnisses durch Anwenden des Hash-Algorithmus umfasst:
- Hashen einer MAC-Adresse der sendenden Vorrichtung.

13. Medium nach einem der Ansprüche 9 bis 12, wobei die Identifizierungsinformationen der sendenden Vorrichtung eine Vorrichtungskennung und Fähigkeitsdetails der sendenden Vorrichtung umfassen.

14. Medium nach Anspruch 13, wobei die Fähigkeitsdetails der sendenden Vorrichtung anzeigen, dass die sendende Vorrichtung dazu ausgelegt ist, als Satellitenknoten in einem Mesh-Netzwerk zu arbeiten.

15. Medium nach einem der Ansprüche 9 bis 14, wobei die Operationen umfassen:
- Empfangen, durch die Steuerung, von Benutzereingaben, die anfordern, dass die sendende Vorrichtung als Knoten in ein von der Steuerung verwaltetes Mesh-Netzwerk hinzugefügt wird, wobei das Übertragen der Passwortanforderung als Reaktion auf das Empfangen der Benutzereingaben durchgeführt wird.

16. Medium nach einem der Ansprüche 9 bis 15, wobei die Operationen umfassen:
- Hinzufügen der sendenden Vorrichtung zu Topologiedaten für ein Mesh-Wi-Fi-Netzwerk.

17. System, umfassend:
- einen oder mehrere Prozessoren; und
- maschinenlesbare Medien, die interoperabel mit dem einen oder den mehreren Prozessoren gekoppelt sind und eine oder mehrere Anweisungen speichern, die bei Ausführung durch den einen oder die mehreren Prozessoren Operationen durchführen, die Folgendes umfassen:
- Empfangen, durch einen drahtlosen Empfänger einer Steuerung, von durch eine sendende Vorrichtung übertragenen Broadcast-Informationen, wobei die Broadcast-Informationen (i) Identifizierungsinformationen der sendenden Vorrichtung und (ii) eine ungültige Adresse umfassen, die keine für die Kommunikation mit einer Steuerung ausgelegte Vorrichtung darstellt, wobei das Empfangen der ungültigen Adresse ein Hinweis darauf ist, dass sich die Vorrichtung innerhalb der Kommunikationsreichweite der Steuerung befindet, und wobei die Steuerung die Identifizierungsinformationen verwendet, um die Vorrichtung zu einer Liste von Vorrichtungen hinzuzufügen, die zum Hinzufügen zu einem Mesh-Netzwerk der Steuerung verfügbar sind;
- Übertragen, durch die Steuerung und ohne Registrieren der sendenden Vorrichtung bei der Steuerung, einer Passwortanforderung an die sendende Vorrichtung als Reaktion auf das Empfangen der Broadcast-Informationen;
- Erhalten, durch die Steuerung und von der auf die Passwortanforderung reagierenden sendenden Vorrichtung, von Passwortinformationen, die gehashte Daten beinhalten, welche durch einen von der sendenden Vorrichtung betriebenen Hash-Algorithmus erzeugt wurden;
- Erzeugen, durch die Steuerung, eines Hash-Ergebnisses durch Anwenden des Hash-Algorithmus auf eine Kennung der sendenden Vorrichtung;
- Vergleichen, durch die Steuerung, der von der sendenden Vorrichtung empfangenen gehashten Daten mit dem von der Steuerung erzeugten Hash-Ergebnis;
- Aktualisieren, durch die Steuerung, eines Satzes registrierter Netzwerkvorrichtungen basierend auf dem Vergleichen der gehashten Daten mit dem Hash-Ergebnis, umfassend:
- Registrieren, durch die Steuerung, der sendenden Vorrichtung in dem Satz registrierter Netzwerkvorrichtungen basierend darauf, dass das Vergleichen eine Übereinstimmung zwischen den gehashten Daten und dem Hash-Ergebnis ergibt; und
- Auslassen, durch die Steuerung, der sendenden Vorrichtung aus dem Satz registrierter Netzwerkvorrichtungen basierend darauf, dass das Vergleichen offenbart, dass die Übereinstimmung zwischen den gehashten Daten und dem Hash-Ergebnis fehlt.

18. System nach Anspruch 17, wobei die ungültige Adresse keiner Vorrichtung in einer sendenden Umgebung der sendenden Vorrichtung zugeordnet ist und in Form einer Medienzugriffsteuerungsadresse, MAC-Adresse, vorliegt.

19. System nach einem der Ansprüche 17 oder 18, wobei die Operationen das Aktivieren eines Wi-Fi Protected Setup Personal Identification Number-Dienstes, WPS-PIN-Dienstes, als Reaktion auf das Empfangen der Broadcast- Informationen umfassen.

20. System nach einem der Ansprüche 17 bis 19, wobei das Erzeugen des Hash-Ergebnisses durch Anwenden des Hash-Algorithmus umfasst:
- Hashen einer MAC-Adresse der sendenden Vorrichtung.

## Revendications

1. Procédé comprenant :
- la réception (402), par un récepteur sans fil d'un contrôleur, d'informations de diffusion transmises par un dispositif émetteur, les informations de diffusion comportant (i) des informations d'identification du dispositif émetteur et (ii) une adresse invalide ne représentant pas un dispositif configuré pour communiquer avec un contrôleur donné, la réception de l'adresse invalide constituant une indication que le dispositif se trouve à portée de communication du contrôleur, et le contrôleur utilisant les informations d'identification pour ajouter le dispositif à une liste de dispositifs susceptibles d'être ajoutés à un réseau maillé du contrôleur ;
- la transmission (404), par le contrôleur et sans enregistrement du dispositif émetteur auprès du contrôleur, d'une demande de mot de passe au dispositif émetteur en réponse à la réception des informations de diffusion ;
- l'obtention (406), par le contrôleur et en provenance du dispositif émetteur en réponse à la demande de mot de passe, d'informations de mot de passe comportant des données hachées générées par un algorithme de hachage mis en œuvre par le dispositif émetteur ;
- la génération (408), par le contrôleur, d'un résultat de hachage par application de l'algorithme de hachage à un identifiant du dispositif émetteur ;
- la comparaison (410), par le contrôleur, des données hachées reçues en provenance du dispositif émetteur avec le résultat de hachage généré par le contrôleur ;
- la mise à jour (412), par le contrôleur, d'un ensemble de dispositifs réseau enregistrés sur la base de la comparaison des données hachées avec le résultat de hachage, comportant :
- l'enregistrement, par le contrôleur, du dispositif émetteur dans l'ensemble de dispositifs réseau enregistrés dès lors que la comparaison se traduit par une concordance entre les données hachées et le résultat haché ; et
- l'omission, par le contrôleur, du dispositif émetteur de l'ensemble de dispositifs réseau enregistrés dès lors que la comparaison révèle une absence de concordance entre les données hachées et le résultat haché.

2. Procédé selon la revendication 1, dans lequel l'adresse invalide n'est associée à aucun dispositif à proximité de transmission du dispositif émetteur, et se présente sous la forme d'une adresse de contrôle d'accès au support, MAC.

3. Procédé selon l'une quelconque des revendications précédentes, comprenant l'activation d'un service de numéro d'identification personnel de configuration protégée Wi-Fi, WPS-PIN, en réponse à la réception des informations de diffusion.

4. Procédé selon l'une quelconque des revendications précédentes, dans lequel la génération du résultat de hachage par application de l'algorithme de hachage comprend :
- le hachage d'une adresse MAC du dispositif émetteur.

5. Procédé selon l'une quelconque des revendications précédentes, dans lequel les informations d'identification du dispositif émetteur comportent un identifiant de dispositif et des éléments renseignant sur les capacités de dispositif émetteur.

6. Procédé selon la revendication 5, dans lequel les éléments renseignant sur les capacités du dispositif émetteur indiquent que le dispositif émetteur est configuré pour fonctionner en tant que nœud satellite dans un réseau maillé.

7. Procédé selon l'une quelconque des revendications précédentes, comprenant en outre :
- la réception, par le contrôleur, d'une entrée utilisateur demandant que le dispositif émetteur soit ajouté en tant que nœud dans un réseau maillé géré par le contrôleur, la transmission de la demande de mot de passe étant réalisée en réponse à la réception de l'entrée utilisateur.

8. Procédé selon l'une quelconque des revendications précédentes, comprenant en outre :
- l'ajout du dispositif émetteur à des données de topologie d'un réseau Wi-Fi maillé.

9. Support non transitoire lisible par ordinateur stockant une ou plusieurs instructions exécutables par un système informatique pour réaliser des opérations comprenant :
- la réception, par un récepteur sans fil d'un contrôleur, d'informations de diffusion transmises par un dispositif émetteur, les informations de diffusion comportant (i) des informations d'identification du dispositif émetteur et (ii) une adresse invalide ne représentant pas un dispositif configuré pour communiquer avec un contrôleur donné, la réception de l'adresse invalide constituant une indication que le dispositif se trouve à portée de communication du contrôleur, et le contrôleur utilisant les informations d'identification pour ajouter le dispositif à une liste de dispositifs susceptibles d'être ajoutés à un réseau maillé du contrôleur ;
- la transmission, par le contrôleur et sans enregistrement du dispositif émetteur auprès du contrôleur, d'une demande de mot de passe au dispositif émetteur en réponse à la réception des informations de diffusion ;
- l'obtention, par le contrôleur et en provenance du dispositif émetteur en réponse à la demande de mot de passe, d'informations de mot de passe comportant des données hachées générées par un algorithme de hachage mis en œuvre par le dispositif émetteur ;
- la génération, par le contrôleur, d'un résultat de hachage par application de l'algorithme de hachage à un identifiant du dispositif émetteur ;
- la comparaison, par le contrôleur, des données hachées reçues en provenance du dispositif émetteur avec le résultat de hachage généré par le contrôleur ;
- la mise à jour, par le contrôleur, d'un ensemble de dispositifs réseau enregistrés sur la base de la comparaison des données hachées avec le résultat de hachage, comportant :
- l'enregistrement, par le contrôleur, du dispositif émetteur dans l'ensemble de dispositifs réseau enregistrés dès lors que la comparaison se traduit par une concordance entre les données hachées et le résultat haché ; et
- l'omission, par le contrôleur, du dispositif émetteur de l'ensemble de dispositifs réseau enregistrés dès lors que la comparaison révèle une absence de concordance entre les données hachées et le résultat haché.

10. Support selon la revendication 9, dans lequel l'adresse invalide n'est associée à aucun dispositif à proximité de transmission du dispositif émetteur, et se présente sous la forme d'une adresse de contrôle d'accès au support, MAC.

11. Support selon l'une quelconque des revendications 9 ou 10, dans lequel les opérations comprennent l'activation d'un service de numéro d'identification personnel de configuration protégée Wi-Fi, WPS-PIN, en réponse à la réception des informations de diffusion.

12. Support selon l'une quelconque des revendications 9 à 11, dans lequel la génération du résultat de hachage par application de l'algorithme de hachage comprend :
- le hachage d'une adresse MAC du dispositif émetteur.

13. Support selon l'une quelconque des revendications 9 à 12, dans lequel les informations d'identification du dispositif émetteur comportent un identifiant de dispositif et des éléments renseignant sur les capacités de dispositif émetteur.

14. Support selon la revendication 13, dans lequel les éléments renseignant sur les capacités du dispositif émetteur indiquent que le dispositif émetteur est configuré pour fonctionner en tant que nœud satellite dans un réseau maillé.

15. Support selon l'une quelconque des revendications 9 à 14, dans lequel les opérations comprennent :
- la réception, par le contrôleur, d'une entrée utilisateur demandant que le dispositif émetteur soit ajouté en tant que nœud dans un réseau maillé géré par le contrôleur, la transmission de la demande de mot de passe étant réalisée en réponse à la réception de l'entrée utilisateur.

16. Support selon l'une quelconque des revendications 9 à 15, dans lequel les opérations comprennent :
- l'ajout du dispositif émetteur à des données de topologie d'un réseau Wi-Fi maillé.

17. Système, comprenant :
- un ou plusieurs processeurs ; et
- des supports lisibles par machine couplés de manière interopérable avec le ou les processeurs et stockant une ou plusieurs instructions qui, lorsqu'elles sont exécutées par le ou les processeurs, réalisent des opérations comprenant :
- la réception, par un récepteur sans fil d'un contrôleur, d'informations de diffusion transmises par un dispositif émetteur, les informations de diffusion comportant (i) des informations d'identification du dispositif émetteur et (ii) une adresse invalide ne représentant pas un dispositif configuré pour communiquer avec un contrôleur donné, la réception de l'adresse invalide constituant une indication que le dispositif se trouve à portée de communication du contrôleur, et le contrôleur utilisant les informations d'identification pour ajouter le dispositif à une liste de dispositifs susceptibles d'être ajoutés à un réseau maillé du contrôleur ;
- la transmission, par le contrôleur et sans enregistrement du dispositif émetteur auprès du contrôleur, d'une demande de mot de passe au dispositif émetteur en réponse à la réception des informations de diffusion ;
- l'obtention, par le contrôleur et en provenance du dispositif émetteur en réponse à la demande de mot de passe, d'informations de mot de passe comportant des données hachées générées par un algorithme de hachage mis en œuvre par le dispositif émetteur ;
- la génération, par le contrôleur, d'un résultat de hachage par application de l'algorithme de hachage à un identifiant du dispositif émetteur ;
- la comparaison, par le contrôleur, des données hachées reçues en provenance du dispositif émetteur avec le résultat de hachage généré par le contrôleur ;
- la mise à jour, par le contrôleur, d'un ensemble de dispositifs réseau enregistrés sur la base de la comparaison des données hachées avec le résultat de hachage, comportant :
- l'enregistrement, par le contrôleur, du dispositif émetteur dans l'ensemble de dispositifs réseau enregistrés dès lors que la comparaison se traduit par une concordance entre les données hachées et le résultat haché ; et
- l'omission, par le contrôleur, du dispositif émetteur de l'ensemble de dispositifs réseau enregistrés dès lors que la comparaison révèle une absence de concordance entre les données hachées et le résultat haché.

18. Système selon la revendication 17, dans lequel l'adresse invalide n'est associée à aucun dispositif à proximité de transmission du dispositif émetteur, et se présente sous la forme d'une adresse de contrôle d'accès au support, MAC.

19. Système selon l'une quelconque des revendications 17 ou 18, dans lequel les opérations comprennent l'activation d'un service de numéro d'identification personnel de configuration protégée Wi-Fi, WPS-PIN, en réponse à la réception des informations de diffusion.

20. Système selon l'une quelconque des revendications 17 à 19, dans lequel la génération du résultat de hachage par application de l'algorithme de hachage comprend :
- le hachage d'une adresse MAC du dispositif émetteur.
